(19)

(11) **EP 3 903 122 B1**

(12) # EUROPÄISCHE PATENTSCHRIFT

(45) Veröffentlichungstag und Bekanntmachung des Hinweises auf die Patenterteilung:
**25.02.2026 Patentblatt 2026/09**

(21) Anmeldenummer: **19832983.1**

(22) Anmeldetag: **28.12.2019**

(51) Internationale Patentklassifikation (IPC):
***G01S 7/40*** *(2006.01)* ***G01S 7/497*** *(2006.01)*
***G01S 13/931*** *(2020.01)* ***G01S 17/931*** *(2020.01)*
***G01S 13/34*** *(2006.01)*

(52) Gemeinsame Patentklassifikation (CPC):
**G01S 7/4086; G01S 7/4052; G01S 7/4065; G01S 7/497; G01S 13/931; G01S 17/931;**
G01S 2013/9323

(86) Internationale Anmeldenummer:
**PCT/EP2019/087126**

(87) Internationale Veröffentlichungsnummer:
**WO 2020/136279 (02.07.2020 Gazette 2020/27)**

(54) **SIGNALVERZÖGERUNGSVORRICHTUNG UND SIMULATORVORRICHTUNG ZUR SIMULATION VON RÄUMLICHEN ABSTÄNDEN BEI AUF ELEKTROMAGNETISCHEN WELLEN BASIERENDEN ABSTANDSMESSGERÄTEN**

SIGNAL DELAY APPARATUS AND SIMULATOR APPARATUS FOR SIMULATING SPATIAL DISTANCES IN DISTANCE MEASURING DEVICES BASED ON ELECTROMAGNETIC WAVES

DISPOSITIF À RETARD DE SIGNAL ET DISPOSITIF SIMULATEUR POUR SIMULER DES DISTANCES SPATIALES DANS DES DISPOSITIFS DE MESURE DE DISTANCE BASÉS SUR DES ONDES ÉLECTROMAGNÉTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.12.2018 US 201862786070 P**

(43) Veröffentlichungstag der Anmeldung:
**03.11.2021 Patentblatt 2021/44**

(73) Patentinhaber: **dSPACE GmbH**
**33102 Paderborn (DE)**

(72) Erfinder:
- **PAUL, Jeffrey**
  **Torrance, California 90501 (US)**
- **WATKINS, Jonathan**
  **Lakewood, Colorado 80228 (US)**

(74) Vertreter: **Gesthuysen Patentanwälte Partnerschaftsgesellschaft mbB**
**Huyssenallee 68**
**45128 Essen (DE)**

(56) Entgegenhaltungen:
**EP-A1- 3 115 804**
**DE-A1- 102017 217 800**
**DE-T2- 3 888 993**
**US-A- 4 450 447**
**US-A1- 2004 012 517**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die Erfindung betrifft zum einen eine Signalverzögerungsvorrichtung und zum anderen eine Simulatorvorrichtung zur Simulation von räumlichen Abständen bei auf elektromagnetischen Wellen basierenden Abstandsmessgeräten. Ein Beispiel einer solchen Simulatorvorrichtung mit analoger Signalverzögerung ist z.B. aus DE 10 2017 217800 A1 bekannt.

Ein Abstandsmessgerät basiert dann auf elektromagnetischen Wellen, wenn es zur Bestimmung eines räumlichen Objektabstands zwischen dem Abstandsmessgerät und einem Objekt ein Messsignal in Form von elektromagnetischen Wellen abstrahlt, eine Reflexion des abgestrahlten Messsignals am Objekt als Echosignal empfängt und aus Eigenschaften des abgestrahlten Messsignals und des empfangenen Echosignals den Objektabstand bestimmt. Eine solche Eigenschaft ist zum Beispiel eine Gesamtlaufzeit des Signals, also eine Laufzeit des Messsignals vom Abstandsmessgerät zum Objekt und eine Laufzeit des Echosignals vom Objekt zum Abstandsmessgerät zusammen. Die Bestimmung des Objektabstands erfolgt im Abstandsmessgerät durch eine Auswertevorrichtung. Oftmals ist ein Abstandsmessgerät nicht nur ausgebildet, den Objektabstand zwischen dem Abstandsmessgerät und einem Objekt, sondern auch zum Beispiel eine Größe des Objekts und eine relative Geschwindigkeit zwischen dem Abstandsmessgerät und dem Objekt aus solchen Signalen zu bestimmen. Die Bestimmung der relativen Geschwindigkeit erfolgt für gewöhnlich durch Auswertung des Dopplereffekts in solchen Signalen.

Auf elektromagnetischen Wellen basierende Abstandsmessgeräte sind zum Beispiel Radar- und Lidarabstandsmessgeräte. Radarabstandsmessgeräte basieren auf elektromagnetischen Wellen im Radiofrequenzbereich und Lidarabstandsmessgeräte auf solchen im Laserfrequenzbereich.

Abstandsmessgeräte werden häufig in Kraftfahrzeugen eingesetzt. Objekte sind dabei die Umwelt und in dieser insbesondere andere Verkehrsteilnehmer. Ein üblicher Frequenzbereich der elektromagnetischen Wellen von Radarabstandsmessgeräten in Kraftfahrzeugen liegt um einer Frequenz von 77 GHz.

Abstandsmessgeräte und insbesondere deren Auswertevorrichtungen werden während der Entwicklung natürlich auch erprobt. Ein Ziel der Erprobung ist die Gewährleistung, dass die von einem Abstandsmessgerät bestimmten Objektabstände identisch mit den tatsächlichen Objektabständen sind. Die Erprobung kann in der realen Umwelt oder in einer simulierten Umwelt erfolgen. Die Erprobung in der realen Umwelt muss selbstverständlich mit realen Objekten erfolgen. Sie ist zeitintensiv, teuer und die Reproduzierbarkeit von Messungen ist oftmals durch Störungen aus der Umwelt beeinträchtigt. Die Erprobung in einer simulierten Umwelt erfolgt in einem Simulator, wobei natürlich auch die Objekte simuliert werden müssen. Im Vergleich zur Erprobung in der realen Umwelt ist die Erprobung in der simulierten Umwelt zeitsparend, günstiger und besser reproduzierbar.

Zum Simulator gehört auch eine Simulatorvorrichtung zur Simulation von räumlichen Abständen. Diese weist einen Empfänger, einen Analog-Digital-Umsetzer, eine Signalverzögerungsvorrichtung, einen Digital-Analog-Umsetzer und einen Sender auf. Der Empfänger ist ausgebildet, von einem Abstandsmessgerät abgestrahlte Messsignale in Form von ersten elektromagnetischen Wellen zu empfangen, abwärtszumischen und dem Analog-Digital-Umsetzer zuzuführen. Der Analog-Digital-Umsetzer ist ausgebildet, die abwärtsgemischten Messsignale in einen Datenwortstrom umzusetzen und der Signalverzögerungsvorrichtung zuzuführen. Die Signalverzögerungsvorrichtung ist ausgebildet, den Datenwortstrom zu verzögern und den verzögerten Datenwortstrom dem Digital-Analog-Umsetzer zuzuführen. Durch die Ausbildung der Signalverzögerungsvorrichtung, den Datenwortstrom zu verzögern, ist sie zur Simulation von räumlichen Abständen ausgebildet. Der Digital-Analog-Umsetzer ist ausgebildet, den verzögerten Datenwortstrom in Echosignale umzusetzen und dem Sender zuzuführen. Der Sender ist ausgebildet, die Echosignale aufwärtszumischen und in Form von zweiten elektromagnetische Wellen zurück zum Abstandsmessgerät abzustrahlen. Das Abwärtsmischen und das Aufwärtsmischen sind zumeist komplementär zueinander. Für gewöhnlich erfolgt das Abwärtsmischen durch einen Abwärtsmischer und das Aufwärtsmischen durch einen Aufwärtsmischer.

Somit erzeugt die Simulatorvorrichtung aus einem empfangenen Messsignal, welches von einem Abstandsmessgerät abgestrahlt worden ist, ein Echosignal mit einer Verzögerung und strahlt dieses zurück zum Abstandsmessgerät ab. Das Echosignal wird vom Abstandsmessgerät empfangen und bei der Auswertung von Messsignal und Echosignal durch die Auswertevorrichtung des Abstandsmessgeräts erhöht die von der Signalverzögerungsvorrichtung der Simulatorvorrichtung hinzugefügte Verzögerung die Gesamtlaufzeit. Ein Simulator mit einer solchen Simulatorvorrichtung wird als OTA-Gerät bezeichnet, wobei OTA für over the air steht und verdeutlicht, dass einem Abstandsmessgerät reale elektromagnetische Wellen als Echosignale zugeführt werden und nicht zum Beispiel der Auswertevorrichtung des Abstandsmessgeräts simulierte Echosignale.

Die von der Signalverzögerungsvorrichtung erzeugte Verzögerung $\Delta t$, wobei immer eine zeitliche Verzögerung gemeint ist, erscheint dem Abstandsmessgerät als eine Laufzeit, weshalb durch Einstellung der Verzögerung ein Abstand $\Delta d$ zwischen dem Abstandsmessgerät und einem simulierten Objekt einstellbar ist. Da die Gesamtlaufzeit nicht nur durch die Verzögerung $\Delta t$ gegeben ist, ist der Abstand $\Delta d$ durch die Verzögerung $\Delta t$ im allgemeinen verschieden vom Objektabstand. Da sich elektromagnetische Wellen mit Lichtgeschwindigkeit $c \approx 3 \cdot 10^8$ m/s ausbreiten, ist der Abstand die Hälfte des Produkts aus der Lichtgeschwindigkeit und der Verzögerung, also $\Delta d = 0{,}5\ c\ \Delta t$. Die Simulatorvorrichtung

und insbesondere die Verzögerungsvorrichtung sind Echtzeitvorrichtungen, wobei sich die Anforderungen aus der Ausbreitungsgeschwindigkeit von elektromagnetischen Wellen ergeben.

Bei der Erprobung eines Abstandsmessgeräts in einem Simulator soll der Abstand durch die Verzögerung beliebig vorgebbar sein. Dazu muss die Signalverzögerungsvorrichtung beliebige Verzögerungen erzeugen können. Aus dem Stand der Technik sind digitale Signalverzögerungsvorrichtungen mit digitalen Verzögerungsleitungen bekannt. Die Erfindung betrifft nur digitale aber keine analogen Signalverzögerungsvorrichtungen. Digitale Verzögerungsleitungen werden zum Beispiel mit verschiedenen Typen von ICs realisiert. Ein Typ von IC ist zum Beispiel das FPGA. Das FPGA ist besonders geeignet, da sich mit diesem nicht nur digitale Verzögerungsleitungen, sondern auch andere Elemente der Signalverzögerungsvorrichtung und oftmals auch der Simulatorvorrichtung realisieren lassen. Hinzu kommt, dass FPGAs im Vergleich zu anderen Typen von ICs preiswert und rekonfigurierbar sind. Ein Nachteil von FPGAs ist jedoch ein im Vergleich zu anderen Typen von ICs niedrigerer Arbeitstakt $f_A$. Wenn zum Beispiel in einem FPGA eine Verzögerungsleitung realisiert ist, welche den Datenwortstrom um einen Arbeitstakt des FPGAs verzögert und der FPGA einen Arbeitstakt von $f_A = 625$ MHz hat, dann beträgt die Abstandsauflösung $\Delta d = 0{,}5 \cdot c \cdot (1/f_A) = 24$ cm. Dass bedeutet, dass der durch die Signalverzögerungsvorrichtung erzeugte minimale Abstand zwischen dem Abstandsmessgerät und einem simulierten Objekt 24 cm beträgt und auch nur ein Vielfaches von 24 cm sein kann. Bei diesem Abstand handelt es sich um einen zusätzlichen Abstand.

Aufgabe der vorliegenden Erfindung ist die Angabe einer Signalverzögerungsvorrichtung und einer Simulatorvorrichtung mit einer solchen Signalverzögerungsvorrichtung, bei welchen die im Stand der Technik aufgezeigten Nachteile zumindest vermindert sind, wozu insbesondere eine Erhöhung der Abstandsauflösung gehört.

Die Aufgabe ist in einer ersten Alternative durch eine Signalverzögerungsvorrichtung gemäß Patentanspruch 1 gelöst.

Diese erfindungsgemäße Signalverzögerungsvorrichtung zur Simulation von räumlichen Abständen bei auf elektromagnetischen Wellen basierenden Abstandsmessgeräten weist einen Demultiplexer, $D \in$ Verzögerungseinrichtungen, D Zusatzverzögerungseinrichtungen, einen Multiplexer und eine Steuerungseinrichtung auf. D ist also eine ganze Zahl größer oder gleich 1.

Der Demultiplexer weist einen Demultiplexereingang und D Demultiplexerausgänge auf. Jede der D Verzögerungseinrichtungen weist einen Verzögerungseingang und einen Verzögerungsausgang auf. Jede der D Zusatzverzögerungseinrichtungen weist einen Zusatzverzögerungseingang und einen Zusatzverzögerungsausgang auf. Der Multiplexer weist $2 \cdot D$ Multiplexereingänge und einen Multiplexerausgang auf. Die Anzahl der Multiplexereingänge ist demnach doppelt so hoch wie die Anzahl der Demultiplexerausgänge.

Bei jeder der D Verzögerungseinrichtungen sind zum einen der Verzögerungseingang und einer der D Demultiplexerausgänge miteinander über einen Zuführungssignalpfad und zum anderen der Verzögerungsausgang und einer der $2 \cdot D$ Multiplexereingänge miteinander über einen Verzögerungssignalpfad verbunden. Bei jeder der D Zusatzverzögerungseinrichtungen sind zum einen der Zusatzverzögerungseingang mit einem der Verzögerungssignalpfade und zum anderen der Zusatzverzögerungsausgang und einer der $2 \cdot D$ Multiplexereingänge miteinander über einen Zusatzverzögerungssignalpfad verbunden. Die einzelnen Zuführungssignalpfade sind separat voneinander, also nicht miteinander verbunden. Gleiches gilt für die einzelnen Verzögerungssignalpfade und auch für die Zusatzverzögerungssignalpfade.

Der Demultiplexer ist ausgebildet, einen Datenwörter aufweisenden Eingangsdatenwortstrom mit einer Außenübertragungsrate von S am Demultiplexereingang in D miteinander verschachtelte Paralleldatenwortströme mit einer Innenübertragungsrate von jeweils $P = S/D$ aufzuteilen und diese an den D Demultiplexerausgängen auszugeben. Ein Datenwortstrom wie der Eingangsdatenwortstrom oder jeder der Paralleldatenwortströme weist seriell aufeinander folgende Datenwörter auf. Die zeitliche Abfolge der Datenwörter ist demnach sequenziell. Ein Datenwort weist allgemein ein oder mehrere Bit als Informationsträger auf. Zum Beispiel weist ein Datenwort 10 Bit auf. Während die Übertragung der Datenwörter also zeitlich aufeinanderfolgend erfolgt, erfolgt die Übertragung der Bits eines Datenworts für gewöhnlich gleichzeitig, also parallel. Signalpfade wie der Zuführungssignalpfad, der Verzögerungssignalpfad und der Zusatzverzögerungssignalpfad sind entsprechend zur Übertragung von Datenworten ausgebildet.

Jeder der D Verzögerungseinrichtungen ist ein Weiterleitungsverzögerungsfaktor $m \in {}_0$ vorgebbar und jede der D Verzögerungseinrichtungen ist ausgebildet, jedes Datenwort im jeweiligen Paralleldatenwortstrom am Verzögerungseingang um eine Weiterleitungsverzögerungszeit $\Delta t_m = m/P$ zu verzögern und das verzögerte Datenwort am Verzögerungsausgang auszugeben. Eine Verzögerungseinrichtung verzögert demnach alle Datenwörter in einem am Verzögerungseingang anliegenden Datenwortstrom, sodass am Verzögerungsausgang der Verzögerungseinrichtung ein Datenwortstrom anliegt, der gegenüber dem Datenwortstrom am Verzögerungseingang um die Weiterleitungsverzögerungszeit $\Delta t_m$ verzögert, aber im Übrigen mit diesem identisch ist. Die Weiterleitungsverzögerungszeit ist bei allen D Verzögerungseinrichtungen identisch. m ist dabei eine ganze Zahl größer oder gleich 0.

Jede der D Zusatzverzögerungseinrichtungen ist ausgebildet, jedes Datenwort im jeweiligen verzögerten Paralleldatenwortstrom am Zusatzverzögerungseingang um eine Zusatzverzögerungszeit von $\Delta t_z = 1/P$ zu verzögern und das zusätzlich verzögerte Datenwort am Zusatzverzögerungsausgang auszugeben. Eine Zusatzverzögerungseinrichtung verzögert demnach alle Datenwörter in einem am Zusatzverzögerungseingang anliegenden Datenwortstrom, sodass am Zusatzverzögerungsausgang der Zusatzverzögerungseinrichtung ein Datenwortstrom anliegt, der gegenüber dem Datenwortstrom am Zusatzverzögerungseingang um die Zusatzverzögerungszeit $\Delta t_Z$ verzögert, aber im Übrigen mit diesem identisch ist.

Der Steuerungseinrichtung ist ein Ausgabeverzögerungsfaktor $n \in _0$ vorgebbar. Weiter ist sie ausgebildet, aus einem vorgegebenen Ausgabeverzögerungsfaktor n den Weiterleitungsverzögerungsfaktor m zu bestimmen und diesen den D Verzögerungseinrichtungen vorzugeben. Darüber hinaus ist sie ausgebildet, den Multiplexer derart anzusteuern, dass ein Ausgangsdatenwortstrom am Multiplexerausgang ausgegeben wird, der dem Eingangsdatenwortstrom mit einer zeitlichen Verzögerung von $\Delta t_D = n/S$ entspricht. n ist dabei eine ganze Zahl größer oder gleich 0. Demnach ist die Steuerungseinrichtung ausgebildet, den Multiplexer derart anzusteuern, dass aus den Datenwörtern in den an den $2 \cdot D$ Multiplexereingängen anliegenden verzögerten Datenwortströmen der Ausgangsdatenwortstrom zusammengesetzt wird.

Die erfindungsgemäße Signalverzögerungsvorrichtung hat den Vorteil, dass bei Beibehaltung eines Arbeitstakts $f_A$ eines ICs, in welchem die Verzögerungseinrichtungen und Zusatzverzögerungseinrichtungen realisiert sind, die Abstandsauflösung um den Faktor D im Vergleich zu aus dem Stand der Technik bekannten Signalverzögerungsvorrichtungen vergrößert ist. Lediglich der Demultiplexer und der Multiplexer müssen für die Außenübertragungsrate ausgebildet sein. Vorzugsweise ist zumindest eine der Verzögerungseinrichtungen und/oder eine der Zusatzverzögerungseinrichtungen in einem FPGA realisiert. Besonders vorteilhaft ist die Realisierung der Signalverzögerungsvorrichtung in einem FPGA, da dieses im Vergleich zu anderen ICs kostengünstig und rekonfiguierbar ist. Vorzugsweise umfast diese Realisierung auch den Demultiplexer und Multiplexer.

Für die Anzahl D = 2 und einer Außenübertragungsrate von S = 1 GS/s ergibt sich das Folgende: Die Signalverzögerungsvorrichtung weist 2 Verzögerungseinrichtungen und 2 Zusatzverzögerungseinrichtungen auf. Der Demultiplexer weist 2 Demultiplexerausgänge auf und der Multiplexer 4 Multiplexereingänge. Die Außenübertragungsrate von S = 1 GS/s bedeutet, dass ein Datenwortstrom mit einer Anzahl von 1 Milliarde Datenwörtern pro Sekunde übertragen wird. Die Innenübertragungsrate ist P = S/D = (1GS/s)/2 = 500 MS/s. Es gibt insgesamt 2 Paralleldatenwortströme. Die Innenübertragungsrate wird zum Beispiel mit einem FPGA realisiert, der einen Arbeitstakt von $f_A$ = 500 MHz aufweist, sodass die Innenübertragungsrate von P = 500 GS/s umgesetzt ist.

In einer Ausgestaltung der ersten Alternative der erfindungsgemäßen Signalverzögerungsvorrichtung ist vorgesehen, dass die Steuerungseinrichtung ausgebildet ist, den Weiterleitungsverzögerungsfaktor gemäß m = n/D zu bestimmen. Demnach ist m die größte ganze Zahl, die kleiner oder gleich n/D ist.

In einer weiteren Ausgestaltung der Signalverzögerungsvorrichtung ist vorgesehen, dass zumindest eine der D Zusatzverzögerungseinrichtungen einen Arbeitstakt von $f_P = S/D$ aufweist. Vorzugsweise entspricht der Arbeitstakt $f_P$ dem Arbeitstakt $f_A$ des ICs.

In einer weiteren Ausgestaltung der ersten Alternative ist vorgesehen, dass zumindest eine der Zusatzverzögerungseinrichtungen eine Verzögerungsleitung ist.

In einer weiteren Ausgestaltung der ersten Alternative ist vorgesehen, dass zumindest eine der Zusatzverzögerungseinrichtungen ein Flipflop ist, vorzugsweise ein D-Flipflop ist.

Die Aufgabe ist in einer zweiten Alternative durch eine Signalverzögerungsvorrichtung gemäß Patentanspruch 7 gelöst.

Diese erfindungsgemäße Signalverzögerungsvorrichtung zur Simulation von räumlichen Abständen bei auf elektromagnetischen Wellen basierenden Abstandsmessgeräten weist einen Demultiplexer, D E Verzögerungseinrichtungen, einen Multiplexer und eine Steuerungseinrichtung auf.

Der Demultiplexer weist einen Demultiplexereingang und D Demultiplexerausgänge auf. Jede der D Verzögerungseinrichtungen weist einen Verzögerungseingang und einen Verzögerungsausgang auf. Der Multiplexer weist D Multiplexereingänge und einen Multiplexerausgang auf. Die Anzahl der Multiplexereingänge ist demnach so hoch wie die Anzahl der Demultiplexerausgänge.

Bei jeder der D Verzögerungseinrichtungen sind zum einen der Verzögerungseingang und einer der D Demultiplexerausgänge miteinander über einen Zuführungssignalpfad und zum anderen der Verzögerungsausgang und einer der D Multiplexereingänge miteinander über einen Verzögerungssignalpfad verbunden. Die einzelnen Zuführungssignalpfade sind separat voneinander, also nicht miteinander verbunden. Gleiches gilt auch für die einzelnen Verzögerungssignalpfade.

Der Demultiplexer ist ausgebildet, einen Datenwörter aufweisenden Eingangsdatenwortstrom mit einer Außenübertragungsrate von S am Demultiplexereingang in D miteinander verschachtelte Paralleldatenwortströme mit einer Innenübertragungsrate von jeweils P = S/D aufzuteilen und diese an den D Demultiplexerausgängen auszugeben.

Jeder der D Verzögerungseinrichtungen ist ein separater Weiterleitungsverzögerungsfaktor $m_d \in _0$ mit $d \in \leq D$ vorgebbar und jede der D Verzögerungseinrichtungen ist ausgebildet, jedes Datenwort im jeweiligen Paralleldatenwortstrom am Verzögerungseingang um eine separate Weiterleitungsverzögerungszeit $\Delta t_{m,d} = m_d/P$ zu verzögern und das verzögerte Datenwort am Verzögerungsausgang auszugeben. Die Weiterleitungsverzögerungszeit kann somit zwischen den D Verzögerungseinrichtungen verschieden sein.

Der Steuerungseinrichtung ist ein Ausgabeverzögerungsfaktor $n \in 0$ vorgebbar. Weiter ist sie ausgebildet, aus einem vorgegebenen Ausgabeverzögerungsfaktor n die separaten Weiterleitungsverzögerungsfaktoren $m_d$ zu bestimmen und diese den D einstellbaren Verzögerungseinrichtungen vorzugeben. Darüber hinaus ist sie ausgebildet, den Multiplexer derart anzusteuern, dass ein Ausgangsdatenwortstrom am Multiplexerausgang ausgegeben wird, der dem Eingangsdatenwortstrom mit einer zeitlichen Verzögerung von $\Delta t_D = n/S$ entspricht. Demnach ist die Steuerungseinrichtung ausgebildet, den Multiplexer derart anzusteuern, dass aus den Datenwörtern in den an den D Multiplexereingängen anliegenden verzögerten Datenwortströmen der Ausgangsdatenwortstrom zusammengesetzt wird.

Auch diese erfindungsgemäße Signalverzögerungsvorrichtung hat den Vorteil, dass bei Beibehaltung eines Arbeitstakts $f_A$ eines ICs, in welchem die Verzögerungseinrichtungen realisiert sind, die Abstandsauflösung um den Faktor D im Vergleich zu aus dem Stand der Technik bekannten Signalverzögerungsvorrichtungen vergrößert ist. Lediglich der Demultiplexer und der Multiplexer müssen für die Außenübertragungsrate ausgebildet sein. Vorzugsweise ist zumindest eine der Verzögerungseinrichtungen in einem FPGA realisiert. Besonders vorteilhaft ist die Realisierung der Signalverzögerungsvorrichtung in einem FPGA, da dieses im Vergleich zu anderen ICs kostengünstig und rekonfiguierbar ist. Vorzugsweise umfasst diese Realisierung auch den Demultiplexer und Multiplexer.

Im Gegensatz zur ersten Alternative weist die zweite Alternative keine Zusatzverzögerungseinrichtungen auf und sind stattdessen den Verzögerungseinrichtungen separate Weiterleitungsverzögerungsfaktoren vorgebbar. Zu den Vorteilen der zweiten gegenüber der ersten Alternative gehören das Fehlen von Zusatzverzögerungseinrichtungen und die Halbierung der Multiplexereingänge. Zu den Nachteilen der zweiten gegenüber der ersten Alternative gehört die Ausgestaltung der Verzögerungseinrichtungen und der Steuerungseinrichtung, sodass separate Weiterleitungsverzögerungsfaktoren für jede der Verzögerungseinrichtung vorgebbar sind. Im Übrigen gelten die Ausführungen zur ersten Alternative für die zweite entsprechend und umgekehrt.

Beiden alternativen Signalverzögerungsvorrichtungen liegt jedoch dieselbe Idee zugrunde. Und zwar wird bei Beibehaltung eines Arbeitstakts $f_A$ eines ICs, in welchem die Verzögerungseinrichtungen und gegebenenfalls auch die Zusatzverzögerungseinrichtungen realisiert sind, die Abstandsauflösung um den Faktor D im Vergleich zu aus dem Stand der Technik bekannten Signalverzögerungsvorrichtungen erhöht. Lediglich der Demultiplexer und der Multiplexer müssen für die Außenübertragungsrate ausgebildet sein.

In einer Ausgestaltung der zweiten Alternative der erfindungsgemäßen Signalverzögerungsvorrichtung ist vorgesehen, dass die Steuerungseinrichtung ausgebildet ist, die separaten Weiterleitungsverzögerungsfaktoren gemäß $m_d = (n+d-1)/D$ mit $d \; E \leq D$ zu bestimmen.

In einer Ausgestaltung einer der erfindungsgemäßen Signalverzögerungsvorrichtungen ist vorgesehen, dass die Außenübertragungsrate $S \geq 2$ GS/s, vorzugsweise $S \geq 2{,}5$ GS/s ist. In einer weiteren Ausgestaltung ist D = 2, vorzugsweise D = 8, besonders vorzugsweise D = 4. Wenn die Außenübertragungsrate $S \geq 2{,}5$ GS/s und D = 4 sind, dann ist die Innenübertragungsrate P = S/D = (2,5 GS/s)/4 = 625 MS/s. Diese Innenübertragungsrate ist durch ICs realisierbar, die mit einem Arbeitstakt von 625 MHz arbeiten. Zum Beispiel stehen FPGAs mit einem solchen Arbeitstakt zur Verfügung.

In einer weiteren Ausgestaltung ist vorgesehen, dass der Demultiplexer und/oder der Multiplexer einen der Außenübertragungsrate S entsprechenden Arbeitstakt $f_S$ aufweisen bzw. aufweist. Wenn die Außenübertragungsrate S = 2,5 GS/s beträgt, dann beträgt der Arbeitstakt von Demultiplexer und/oder Multiplexer $f_S = 2{,}5$ GHz.

In einer weiteren Ausgestaltung ist vorgesehen, dass zumindest eine der D Verzögerungseinrichtungen den Arbeitstakt von $f_P = S/D$ aufweist. Vorzugsweise entspricht der Arbeitstakt $f_P$ dem Arbeitstakt $f_A$ des ICs.

In einer weiteren Ausgestaltung ist vorgesehen, dass zumindest eine der Verzögerungseinrichtungen eine Verzögerungsleitung ist.

In einer weiteren Ausgestaltung ist vorgesehen, dass die Signalverzögerungsvorrichtung zur Simulation von Abständen bei auf Radar oder Lidar basierenden Abstandsmessgeräten ausgebildet ist.

Die aufgezeigte Aufgabe ist weiterhin auch durch eine Simulatorvorrichtung gemäß Patentanspruch 16 gelöst.

Bei dieser Simulatorvorrichtung ist die Signalverzögerungsvorrichtung der Simulatorvorrichtung wie zuvor beschrieben ausgebildet.

In einer ersten Ausgestaltung der erfindungsgemäßen Simulatorvorrichtung ist vorgesehen, dass die Simulatorvorrichtung eine einzige Antenne sowohl zum Senden als auch Empfangen aufweist.

In einer weiteren Ausgestaltung der Simulatorvorrichtung ist vorgesehen, dass die Simulatorvorrichtung zur Simulation von Abständen bei auf Radar oder Lidar basierenden Abstandsmessgeräten ausgebildet ist.

Im Einzelnen ist eine Vielzahl von Möglichkeiten gegeben, die Signalverzögerungseinrichtungen und die Simulatorvorrichtung auszugestalten und weiterzubilden. Dazu wird verwiesen sowohl auf die den Patentansprüchen 1, 7 und 16 nachgeordneten Patentansprüche als auch auf die nachfolgende Beschreibung eines bevorzugten Ausführungsbeispiels einer Simulatorvorrichtung mit einer Signalverzögerungseinrichtung in Verbindung mit der Zeichnung. In der Zeichnung zeigt abstrahiert

Fig. 1 ein Ausführungsbeispiel einer Simulatorvorrichtung,

Fig. 2 ein erstes Ausführungsbeispiel einer Signalverzögerungseinrichtung,

Fig. 3a-3j Datenwortströme im ersten Ausführungsbeispiel für n = 4,

Fig. 4a-4j Datenwortströme im ersten Ausführungsbeispiel für n = 5,

Fig. 5 ein zweites Ausführungsbeispiel einer Signalverzögerungseinrichtung,

Fig. 6a-6f Datenwortströme im zweiten Ausführungsbeispiel für n = 4 und

Fig. 7a-7f Datenwortströme im zweiten Ausführungsbeispiel für n = 5.

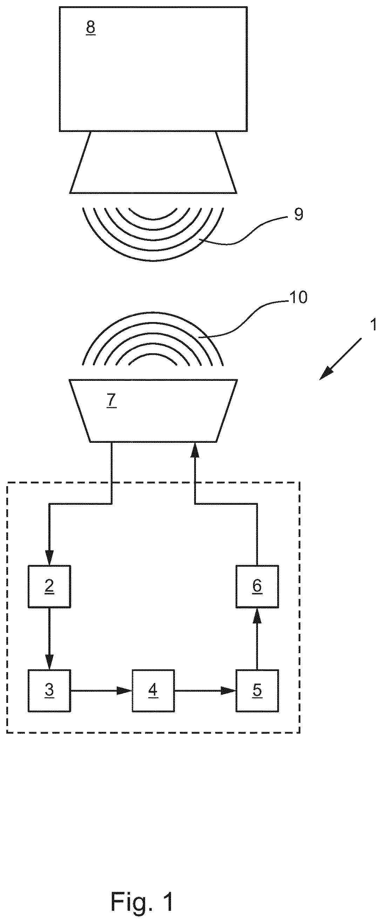

Fig. 1 zeigt in einem Blockdiagramm ein Ausführungsbeispiel einer Simulatorvorrichtung 1. Die Simulatorvorrichtung 1 weist einen Empfänger 2, einen Analog-Digital-Umsetzer 3, eine Signalverzögerungsvorrichtung 4, einen Digital-Analog-Umsetzer 5, einen Sender 6 und eine Antenne 7 auf. Die Simulatorvorrichtung 1 ist Teil eines nicht dargestellten Simulators zur Erprobung eines Abstandsmessgeräts 8.

Das Abstandsmessgerät 8 ist ein Radarabstandsmessgerät, welches mit Signalen in einem Frequenzbereich um eine Frequenz von 77 GHz arbeitet. Das Abstandsmessgerät 8 bestimmt im Betrieb außerhalb eines Simulators einen Abstand zwischen dem Abstandsmessgerät 8 und einem Objekt aus einer Gesamtlaufzeit eines Signals. Zur Gesamtlaufzeit des Signals tragen insbesondere eine Laufzeit eines Messsignals vom Abstandsmessgerät 8 zu dem Objekt und eine Laufzeit eines am Objekt reflektierten Echosignals zurück zum Abstandsmessgerät 8 bei.

In der Simulatorvorrichtung 1 ist der Empfänger 2 ausgebildet, ein vom Abstandsmessgerät 8 abgestrahltes Messsignal in Form von ersten elektromagnetischen Wellen 9 über die Antenne 7 zu empfangen, abwärtszumischen und dem Analog-Digital-Umsetzer 3 zuzuführen. Der Analog-Digital-Umsetzer 3 ist ausgebildet, das abwärtsgemischte Messsignal in einen Datenwortstrom umzusetzen und der Signalverzögerungsvorrichtung 4 zuzuführen. Die Signalverzögerungsvorrichtung 4 ist ausgebildet, den Datenwortstrom um $\Delta t$ zu verzögern und den verzögerten Datenwortstrom dem Digital-Analog-Umsetzer 5 zuzuführen. Durch die Ausbildung der Signalverzögerungsvorrichtung 4, den Datenwortstrom zu verzögern, ist sie zur Simulation von räumlichen Abständen ausgebildet. Gleiches gilt somit auch für die Simulatorvorrichtung 1. Der Digital-Analog-Umsetzer 5 ist ausgebildet, den verzögerten Datenwortstrom in ein Echosignal umzusetzen und dem Sender 6 zuzuführen. Der Sender 6 ist ausgebildet, das Echosignal aufwärtszumischen und in Form von zweiten elektromagnetische Wellen 10 zurück zum Abstandsmessgerät 8 abzustrahlen.

Die Simulatorvorrichtung 1 erzeugt somit aus dem empfangenen Messsignal ein Echosignal mit einer Verzögerung $\Delta t$ und strahlt dieses zurück zum Abstandsmessgerät 8 ab. Das Echosignal wird vom Abstandsmessgerät 8 empfangen und bei der Auswertung von Messsignal und Echosignal durch das Abstandsmessgerät 8 erhöht die von der Signalverzögerungsvorrichtung 4 hinzugefügte Verzögerung $\Delta t$ die Gesamtlaufzeit. Die von der Signalverzögerungsvorrichtung 4 erzeugte Verzögerung $\Delta t$ erscheint dem Abstandsmessgerät 8 als eine Laufzeit, weshalb durch Einstellung der Verzögerung $\Delta t$ ein Abstand $\Delta d$ zwischen dem Abstandsmessgerät 8 und einem simulierten Objekt einstellbar ist. Aufgrund der Integration der Abstandsinformation in die elektromagnetischen Wellen 10 handelt es sich bei dem Simulator um ein OTA-Gerät.

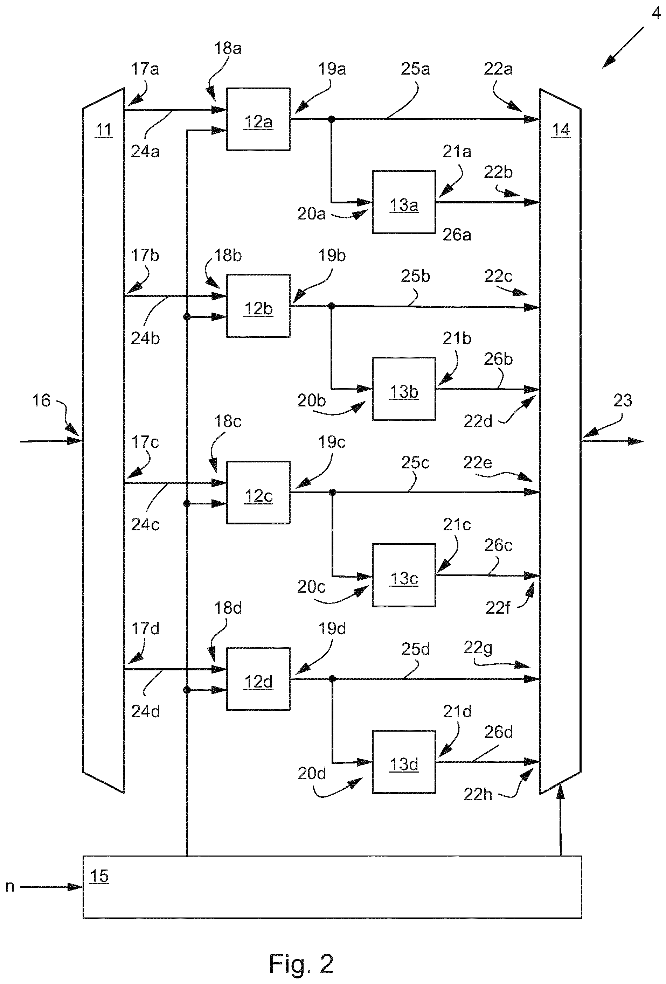

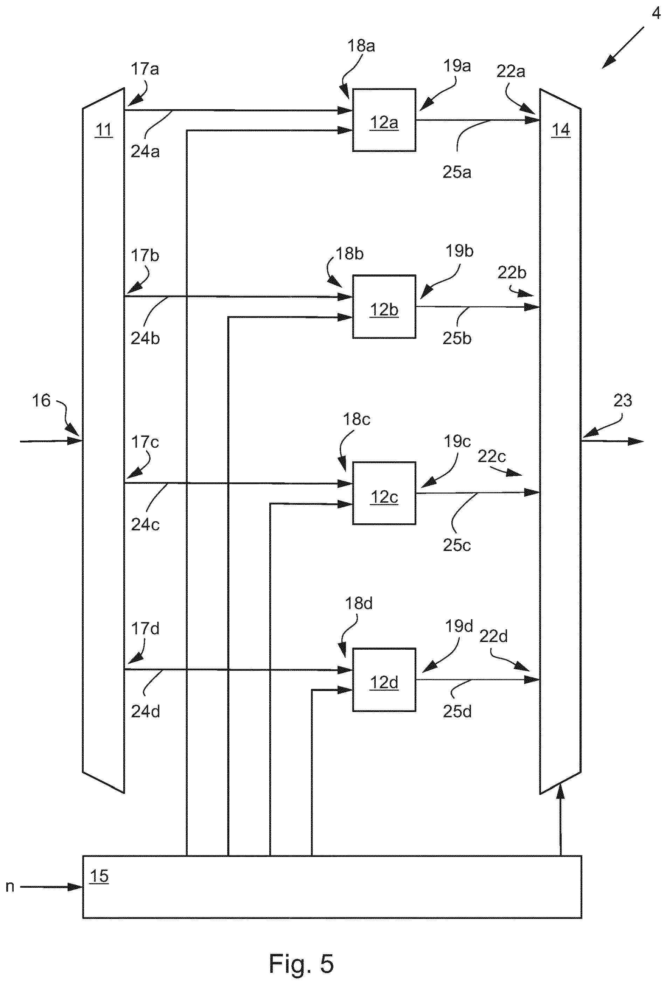

Die Signalverzögerungsvorrichtung 4 ist auf verschiedene Weisen realisierbar. Fig. 2 zeigt ein erstes Ausführungsbeispiel der Signalverzögerungsvorrichtung 4 und Fig. 5 ein zweites Ausführungsbeispiel.

Das in Fig. 2 dargestellte erste Ausführungsbeispiel der Signalverzögerungsvorrichtung 4 weist einen Demultiplexer 11, 4 Verzögerungseinrichtungen 12a-12d, 4 Zusatzverzögerungseinrichtungen 13a-13d, einen Multiplexer 14 und eine Steuerungseinrichtung 15 auf. Demnach ist in diesem Ausführungsbeispiel D = 4. Die 4 Verzögerungseinrichtungen 12a-12d, die 4 Zusatzverzögerungseinrichtungen 13a-13d und die Steuerungseinrichtung 15 sind in einem FPGA realisiert.

Der Demultiplexer 11 weist einen Demultiplexereingang 16 und 4 Demultiplexerausgänge 17a-17d auf. Jede der 4 Verzögerungseinrichtungen 12a-12d weist einen Verzögerungseingang 18a-18d und einen Verzögerungsausgang 19a-19d auf. Jede der 4 Zusatzverzögerungseinrichtungen 13a-13d weist einen Zusatzverzögerungseingang 20a-20d und einen Zusatzverzögerungsausgang 21a-21d auf. Der Multiplexer 14 weist 8 Multiplexereingänge 22a-22h und einen Multiplexerausgang 23 auf. Die Anzahl der Multiplexereingänge 22a-22h ist demnach doppelt so hoch wie die Anzahl der Demultiplexerausgänge 17a-17d.

Bei jeder der 4 Verzögerungseinrichtungen 12a-12d sind zum einen der Verzögerungseingang 18a-18d und einer der 4 Demultiplexerausgänge 17a-17d miteinander über einen Zuführungssignalpfad 24a-24d und zum anderen der Verzögerungsausgang 19a-19d und einer der 8 Multiplexereingänge 22a-22h miteinander über einen Verzögerungssignalpfad 25a-25d verbunden. Bei jeder der 4 Zusatzverzögerungseinrichtungen 13a-13d sind zum einen der Zusatzverzögerungseingang 20a-20d mit einem der Verzögrungssignalpfade 25a-25d und zum anderen der Zusatzverzögerungsausgang 21a-21d und einer der 8 Multiplexereingänge 22a-22h miteinander über einen Zusatzverzögerungssignalpfad 26a-26d verbunden. Die einzelnen Zuführungssignalpfade 24a-24d sind separat voneinander, also nicht miteinander verbunden. Gleiches gilt für die einzelnen Verzögerungssignalpfade 25a-25d und auch für die Zusatzverzögerungssignalpfade 26a-26d.

Der Demultiplexer 11 ist ausgebildet, einen Datenwörter aufweisenden Eingangsdatenwortstrom ($a_0$, $a_1$, $a_2$, $a_3$, $a_4$, $a_5$, $a_6$, $a_7$, $a_8$, $a_9$, $a_{10}$, $a_{11}$, ...) mit einer Außenübertragungsrate von S = 2,5 GS/s am Demultiplexereingang 16 in 4 miteinander verschachtelte Paralleldatenwortströme ($a_0$, $a_4$, $a_8$, ...) und ($a_1$, $a_5$, $a_9$, ...) und ($a_2$, $a_6$, $a_{10}$, ...) und ($a_3$, $a_7$, $a_{11}$, ...) mit einer Innenübertragungsrate von jeweils P = S/D = (2,5 GS/s)/4 = 625 MS/s aufzuteilen und diese an den 4 Demultiplexerausgängen 17a-17d auszugeben. In den Datenwortströmen weist jedes Datenwort 10 Bit auf.

Jeder der 4 Verzögerungseinrichtungen 12a-12d ist ein Weiterleitungsverzögerungsfaktor $m \in {}_0$ vorgebbar und jede der 4 Verzögerungseinrichtungen 12a-12d ist ausgebildet, jedes Datenwort im jeweiligen Paralleldatenwortstrom am Verzögerungseingang 18a-18d um eine Weiterleitungsverzögerungszeit $\Delta t_m$ = m/P = m/(625 MS/s) = m · 1,6 ns zu verzögern und das verzögerte Datenwort am Verzögerungsausgang 19a-19d auszugeben. Die Weiterleitungsverzögerungszeit ist bei allen 4 Verzögerungseinrichtungen 12a-12d identisch.

Jede der 4 Zusatzverzögerungseinrichtungen 13a-13d ist ausgebildet, jedes Datenwort im jeweiligen verzögerten Paralleldatenwortstrom am Zusatzverzögerungseingang 20a-20d um eine Zusatzverzögerungszeit von $\Delta t_z$ = 1/P = 1/(625 MS/s) = 1,6 ns zu verzögern und das zusätzlich verzögerte Datenwort am Zusatzverzögerungsausgang 21a-21d auszugeben.

Der Steuerungseinrichtung 15 ist ein Ausgabeverzögerungsfaktor $n \in {}_0$ vorgebbar. Sie ist ausgebildet, aus einem vorgegebenen Ausgabeverzögerungsfaktor n den Weiterleitungsverzögerungsfaktor m zu bestimmen und diesen den 4 Verzögerungseinrichtungen 12a-12d vorzugeben. Darüber hinaus ist sie ausgebildet, den Multiplexer 14 derart anzusteuern, dass ein Ausgangsdatenwortstrom am Multiplexerausgang 23 ausgegeben wird, der dem Eingangsdatenwortstrom mit einer zeitlichen Verzögerung von Δt = n/S = n/(2,5 GS/s) = n · 0,4 ns entspricht. Dazu ist die Steuerungseinrichtung 15 ausgebildet, den Weiterleitungsverzögerungsfaktor gemäß m = n/4 zu bestimmen. Somit ergibt sich für m als Funktion von n:

| n | 0 | 1 | 2 | 3 | 4 | 5 | 6 | 7 | 8 |
|---|---|---|---|---|---|---|---|---|---|
| m | 0 | 0 | 0 | 0 | 1 | 1 | 1 | 1 | 2 |

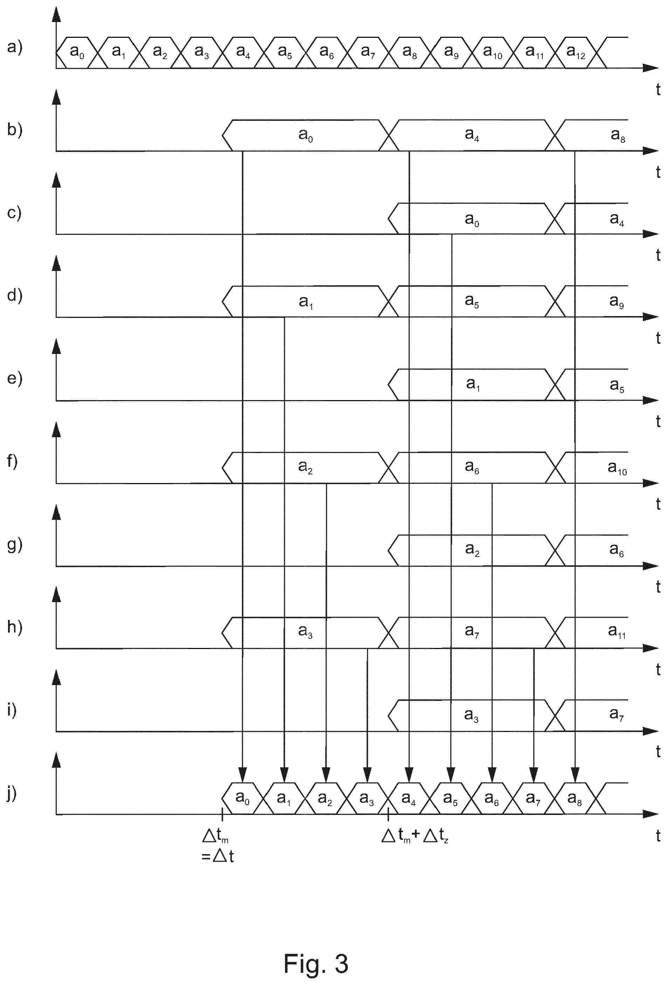

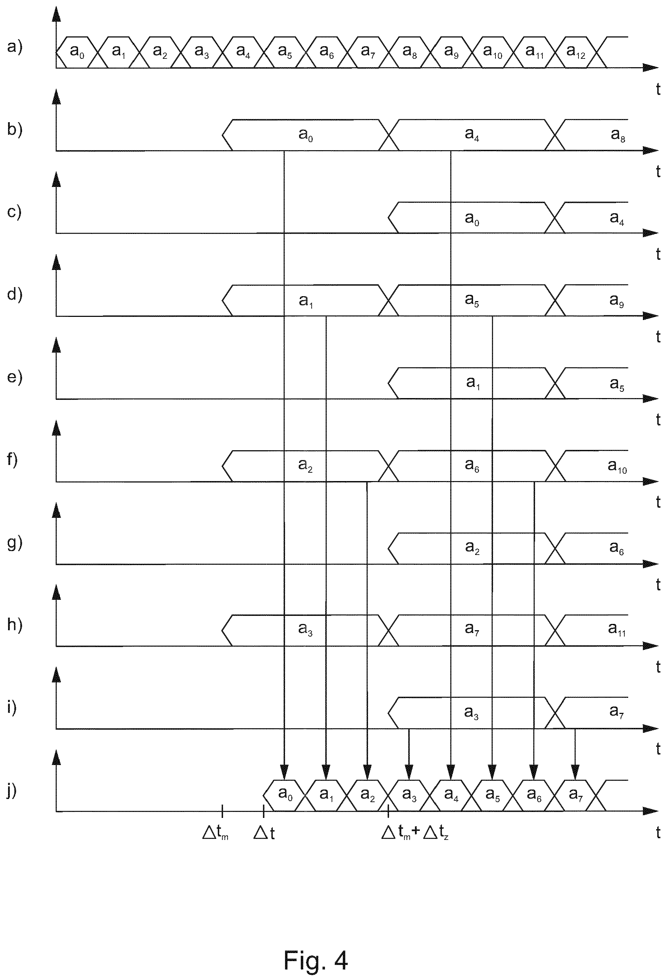

Fig. 3a-3j und 4a-4j zeigen Datenwortströme an bestimmten Stellen in der Signalverzögerungsvorrichtung 4 gemäß dem ersten Ausführungsbeispiel und veranschaulichen die Ansteuerung des Multiplexers 14 durch die Steuerungseinrichtung 15, sodass am Multiplexerausgang 23 ein gegenüber dem Datenwortstrom am Demultiplexereingang 16 um Δt verzögerter Datenwortstrom anliegt.

Fig. 3a-3j zeigen die Datenwortströme über der Zeit für n = 4. Demnach sind m = 1, $\Delta t_m$ = m/P = 1/(625 MS/s) = 1,6 ns und Δt = n/S = 4 · 0,4 ns = 1,6 ns. Die Zeitachsen der Fig. 3a-3j sind synchron zueinander.

Fig. 3a zeigt den Datenwortstrom am Demultiplexereingang 16, Fig. 3b am Multiplexereingang 22a, Fig. 3c am Multiplexereingang 22b, Fig. 3d am Multiplexereingang 22c, Fig. 3e am Multiplexereingang 22d, Fig. 3f am Multiplexereingang 22e, Fig. 3g am Multiplexereingang 22f, Fig. 3h am Multiplexereingang 22g, Fig. 3i am Multiplexereingang 22h und Fig. 3j am Multiplexerausgang 23.

Während die Datenwortströme am Demultiplexereingang 16 und am Multiplexerausgang 23 die Außenübertragungsrate S = 2,5 GS/s aufweisen, weisen die Datenwortströme zwischen den Demultiplexerausgängen 17a-17d und den Multiplexereingängen 22a-22h die Innenübertragungsrate P = 625 MS/s auf.

Die senkrechten Pfeile, welche von den Datenwortströmen in den Fig. 3b-3i zu dem Datenwortstrom in Fig. 3j verlaufen, symbolisieren die Ansteuerung des Multiplexers 14 durch Steuerungseinrichtung 15.

Fig. 4a-4j zeigen die Datenwortströme für n = 5. Demnach ist Δt = n/S = 5 · 0,4 ns = 2,0 ns und ist weiterhin m = 1. Die Datenwortströme in den Fig. 4a-4i sind identisch mit denen in den Fig. 3a-3i. Nur der in Fig. 4j dargestellte Datenwortstrom ist gegenüber dem in 3j dargestellten Datenwortstrom um weitere 0,4 ns verzögert. Hier zeigt sich auch die Notwendigkeit der Zusatzverzögerungseinrichtungen 13a-13d. Die Datenworte $a_3$ und $a_7$ werden von diesen zur richtigen Zeit zur Verfügung gestellt, da die Verzögerungseinrichtungen 12a-12d bereits die nächsten Datenworte $a_7$ und $a_{11}$ bereitstellen.

Das in Fig. 5 dargestellte zweite Ausführungsbeispiel der Signalverzögerungsvorrichtung 4 weist einen Demultiplexer 11, 4 Verzögerungseinrichtungen 12a-12d, einen Multiplexer 14 und eine Steuerungseinrichtung 15 auf. Demnach ist in diesem Ausführungsbeispiel D = 4. Die 4 Verzögerungseinrichtungen 12a-12d und die Steuerungseinrichtung 15 sind in einem FPGA realisiert.

Der Demultiplexer 11 weist einen Demultiplexereingang 16 und 4 Demultiplexerausgänge 17a-17d auf. Jede der 4 Verzögerungseinrichtungen 12a-12d weist einen Verzögerungseingang 18a-18d und einen Verzögerungsausgang 19a-19d auf. Der Multiplexer 14 weist 4 Multiplexereingänge 22a-22d und einen Multiplexerausgang 23 auf. Die Anzahl der Multiplexereingänge 22a-22d ist demnach so hoch wie die Anzahl der Demultiplexerausgänge 17a-17d.

Bei jeder der 4 Verzögerungseinrichtungen 12a-12d sind zum einen der Verzögerungseingang 18a-18d und einer der 4 Demultiplexerausgänge 17a-17d miteinander über einen Zuführungssignalpfad 24a-24d und zum anderen der Verzögerungsausgang 19a-19d und einer der 4 Multiplexereingänge 22a-22d miteinander über einen Verzögerungssignalpfad 25a-25d verbunden. Die einzelnen Zuführungssignalpfade 24a-24d sind separat voneinander, also nicht miteinander verbunden. Gleiches gilt auch für die einzelnen Verzögerungssignalpfade 25a-25d.

Der Demultiplexer 11 ist ausgebildet, einen Datenwörter aufweisenden Eingangsdatenwortstrom ($a_0$, $a_1$, $a_2$, $a_3$, $a_4$, $a_5$, $a_6$, $a_7$, $a_8$, $a_9$, $a_{10}$, $a_{11}$, ...) mit einer Außenübertragungsrate von S = 2,5 GS/s am Demultiplexereingang 16 in 4 miteinander verschachtelte Paralleldatenwortströme ($a_0$, $a_4$, $a_8$, ...) und ($a_1$, $a_5$, $a_9$, ...) und ($a_2$, $a_6$, $a_{10}$, ...) und ($a_3$, $a_7$, $a_{11}$, ...) mit einer Innenübertragungsrate von jeweils P = S/D = (2,5 GS/s)/4 = 625 MS/s aufzuteilen und diese an den 4 Demultiplexerausgängen 17a-17d auszugeben. In den Datenwortströmen weist jedes Datenwort 10 Bit auf.

Jeder der 4 Verzögerungseinrichtungen 12a-12d ist ein separater Weiterleitungsverzögerungsfaktor $m_d \in {}_0$ mit d $\in \leq 4$ vorgebbar und jede der 4 Verzögerungseinrichtungen 12a-12d ist ausgebildet, jedes Datenwort im jeweiligen Paralleldatenwortstrom am Verzögerungseingang 18a-18d um eine separate Weiterleitungsverzögerungszeit $\Delta t_{m,d} = m_d/P = m_d/(625\ MS/s)$ zu verzögern und das verzögerte Datenwort am Verzögerungsausgang 19a-19d auszugeben. Die Weiterleitungsverzögerungszeit kann somit zwischen den 4 Verzögerungseinrichtungen 12a-12d verschieden sein.

Der Steuerungseinrichtung 15 ist ein Ausgabeverzögerungsfaktor $n \in {}_0$ vorgebbar. Die ist ausgebildet, aus einem vorgegebenen Ausgabeverzögerungsfaktor n die separaten Weiterleitungsverzögerungsfaktoren $m_d$ zu bestimmen und diese den 4 einstellbaren Verzögerungseinrichtungen 12a-12d vorzugeben. Darüber hinaus ist sie ausgebildet, den Multiplexer 14 derart anzusteuern, dass ein Ausgangsdatenwortstrom am Multiplexerausgang 23 ausgegeben wird, der dem Eingangsdatenwortstrom mit einer zeitlichen Verzögerung von $\Delta t = n/S = n/(2{,}5\ GS/s) = n \cdot 0{,}4$ ns entspricht. Dazu ist die Steuerungseinrichtung ausgebildet, die Weiterleitungsverzögerungsfaktoren gemäß $m_d = (n+d-1)/4$ mit d E $\leq 4$ zu bestimmen. Somit ergibt sich für $m_d$ als Funktion von n:

| n | $m_1$ | $m_2$ | $m_3$ | $M_4$ |
|---|---|---|---|---|
| 0 | 0 | 0 | 0 | 0 |
| 1 | 0 | 0 | 0 | 1 |
| 2 | 0 | 0 | 1 | 1 |
| 3 | 0 | 1 | 1 | 1 |
| 4 | 1 | 1 | 1 | 1 |
| 5 | 1 | 1 | 1 | 2 |
| 6 | 1 | 1 | 2 | 2 |
| 7 | 1 | 2 | 2 | 2 |
| 8 | 2 | 2 | 2 | 2 |

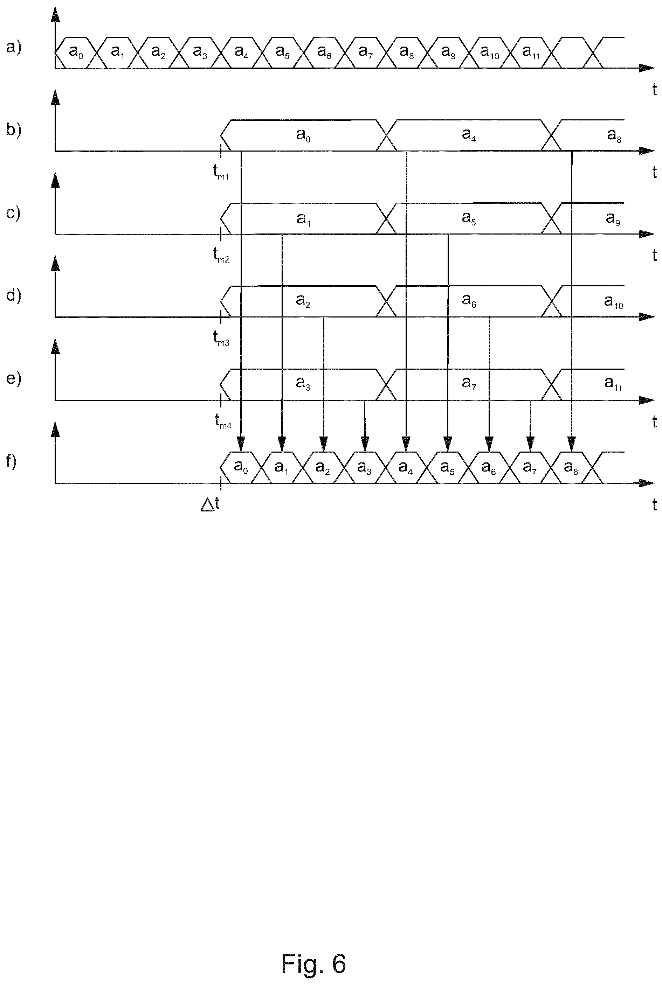

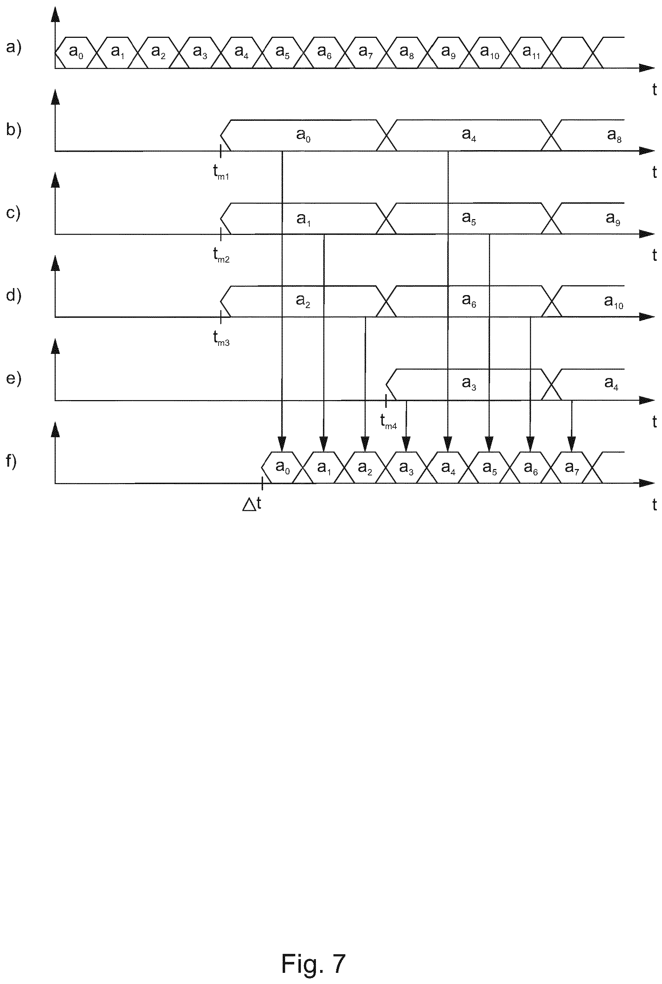

Fig. 6a-6f und 7a-7f zeigen Datenwortströme an bestimmten Stellen in der Signalverzögerungsvorrichtung 4 gemäß dem zweiten Ausführungsbeispiel und veranschaulichen die Ansteuerung des Multiplexers 14 durch die Steuerungseinrichtung 15, sodass am Multiplexerausgang 23 ein gegenüber dem Datenwortstrom am Demultiplexereingang 16 um $\Delta t$ verzögerter Datenwortstrom anliegt.

Fig. 6a-6f zeigen die Datenwortströme über der Zeit für n = 4. Demnach sind $m_1 = m_2 = m_3 = M_4 = 1$, $\Delta t_{m,1} = \Delta t_{m,2} = \Delta t_{m,3} = \Delta t_{m,4} = 1{,}6$ ns und $\Delta t = n/S = 4 \cdot 0{,}4$ ns = 1,6 ns. Die Zeitachsen der Fig. 6a-6f sind synchron zueinander.

Fig. 6a zeigt den Datenwortstrom am Demultiplexereingang 16, Fig. 6b am Multiplexereingang 22a, Fig. 6c am Multiplexereingang 22b, Fig. 6d am Multiplexereingang 22c, Fig. 6e am Multiplexereingang 22d und Fig. 6f am Multiplexerausgang 23.

Während die Datenwortströme am Demultiplexereingang 16 und am Multiplexerausgang 23 die Außenübertragungsrate S = 2,5 GS/s aufweisen weisen die Datenwortströme zwischen den Demultiplexerausgängen 17a-17d und den Multiplexereingängen 22a-22h die Innenübertragungsrate P = 625 MS/s auf.

Die senkrechten Pfeile, welche von den Datenwortströmen in den Fig. 6b-6e zu dem Datenwortstrom in Fig. 6f verlaufen, symbolisieren die Ansteuerung des Multiplexers 14 durch Steuerungseinrichtung 15.

Fig. 7a-7f zeigen die Datenwortströme für n = 5. Demnach sind $m_1 = m_2 = m_3 = 1$, $m_4 = 2$, $\Delta t_{m,1} = \Delta t_{m,2} = \Delta t_{m,3} = 1{,}6$ ns, $\Delta t_{m,4} = 3{,}2$ ns und $\Delta t = n/S = 5 \cdot 0{,}4$ ns = 2,0 ns. Die Datenwortströme in den Fig. 7a-7d sind identisch mit denen in den Fig. 6a-6d. Der in fig. 6e dargestellte Datenwortstrom ist um weitere 1,6 ns verzögert, sodass die Datenworte a3 und a7 zur richtigen Zeit zur Verfügung stehen. Der in Fig. 7f dargestellte Datenwortstrom ist gegenüber dem in Fig. 6f dargestellten Datenwortstrom um weitere 0,4 ns verzögert.

**Bezugszeichen**

| | |
|---|---|
| 1 | Simulatorvorrichtung |
| 2 | Empfänger |
| 3 | Analog-Digital-Umsetzer |
| 4 | Signalverzögerungsvorrichtung |
| 5 | Digital-Analog-Umsetzer |
| 6 | Sender |
| 7 | Antenne |
| 8 | Abstandsmessgerät |
| 9 | erste elektromagnetische Welle |
| 10 | zweite elektromagnetische Welle |
| 11 | Demultiplexer |
| 12a-12d | Verzögerungseinrichtung |
| 13a-13d | Zusatzverzögerungseinrichtung |
| 14 | Multiplexer |
| 15 | Steuerungseinrichtung |
| 16 | Demultiplexereingang |
| 17a-17d | Demultiplexerausgang |
| 18a-18d | Verzögerungseingang |
| 19a-19d | Verzögerungsausgang |
| \20a-20d | Zusatzverzögerungseingang |
| 21a-21d | Zusatzverzögerungsausgang |
| 22a-22h | Multiplexereingang |
| 23 | Multiplexerausgang |
| 24a-24d | Zuführungssignalpfad |
| 25a-25d | Verzögerungssignalpfad |
| 26a-26d | Zusatzverzögerungssignalpfad |

**Patentansprüche**

**1.** Signalverzögerungsvorrichtung (4) zur Simulation von räumlichen Abständen bei auf elektromagnetischen Wellen basierenden Abstandsmessgeräten (8),
**dadurch gekennzeichnet,**

- die Signalverzögerungsvorrichtung (4) einen Demultiplexer (11), $D \in \mathbb{N}$ Verzögerungseinrichtungen (12a-12d), D Zusatzverzögerungseinrichtungen (13a-13d), einen Multiplexer (14) und eine Steuerungseinrichtung (15) aufweist,
- dass der Demultiplexer (11) einen Demultiplexereingang (16) und D Demultiplexerausgänge (17a-17d) aufweist,
- dass jede der D Verzögerungseinrichtungen (12a-12d) einen Verzögerungseingang (18a-18d) und einen Verzögerungsausgang (19a-19d) aufweist,
- dass jede der D Zusatzverzögerungseinrichtungen (13a-13d) einen Zusatzverzögerungseingang (20a-20d) und einen Zusatzverzögerungsausgang (21a-21d) aufweist,
- dass der Multiplexer (14) 2·D Multiplexereingänge (22a-22h) und einen Multiplexerausgang (23) aufweist,
- dass bei jeder der D Verzögerungseinrichtungen (12a-12d) zum einen der Verzögerungseingang (18a-18d) und einer der D Demultiplexerausgänge (17a-17d) miteinander über einen Zuführungssignalpfad (24a-24d) und zum anderen der Verzögerungsausgang (19a-19d) und einer der 2·D Multiplexereingänge (22a-22h) miteinander über einen Verzögerungssignalpfad (25a-25d) verbunden sind,
- dass bei jeder der D Zusatzverzögerungseinrichtungen (13a-13d) zum einen der Zusatzverzögerungseingang (20a-20d) mit einem der Verzögerungssignalpfade (25a-25d) und zum anderen der Zusatzverzögerungsausgang (21a-21d) und einer der 2·D Multiplexereingänge (22a-22h) miteinander über einen Zusatzverzögerungssignalpfad (26a-26d) verbunden sind,

- dass der Demultiplexer (11) ausgebildet ist, einen Datenwörter aufweisenden Eingangsdatenwortstrom mit einer Außenübertragungsrate von S am Demultiplexereingang (16) in D miteinander verschachtelte Paralleldatenwortströme mit einer Innenübertragungsrate von jeweils P = S/D aufzuteilen und diese an den D Demultiplexerausgängen (17a-17d) auszugeben,

- dass jeder der D Verzögerungseinrichtungen (12a-12d) ein Weiterleitungsverzögerungsfaktor $m \in \mathbb{N}_0$ vorgebbar ist, und jede der D Verzögerungseinrichtungen (12a-12d) ausgebildet ist, jedes Datenwort im jeweiligen Paralleldatenwortstrom am Verzögerungseingang (18a-18d) um eine Weiterleitungsverzögerungszeit $\Delta t_m = m/P$ zu verzögern und das verzögerte Datenwort am Verzögerungsausgang (19a-19d) auszugeben,
- dass jede der D Zusatzverzögerungseinrichtungen (13a-13d) ausgebildet ist, jedes Datenwort im jeweiligen verzögerten Paralleldatenwortstrom am Zusatzverzögerungseingang (20a-20d) um eine Zusatzverzögerungszeit von $\Delta t_z = 1/P$ zu verzögern und das zusätzlich verzögerte Datenwort am Zusatzverzögerungsausgang (21a-21d) auszugeben und

- dass der Steuerungseinrichtung (15) ein Ausgabeverzögerungsfaktor $n \in \mathbb{N}_0$ vorgebbar ist, die Steuerungseinrichtung (15) ausgebildet ist, aus einem vorgegebenen Ausgabeverzögerungsfaktor n den Weiterleitungsverzögerungsfaktor m zu bestimmen und diesen den D Verzögerungseinrichtungen (12a-12d) vorzugeben und den Multiplexer (14) derart anzusteuern, dass ein Ausgangsdatenwortstrom am Multiplexerausgang (23) ausgegeben wird, der dem Eingangsdatenwortstrom mit einer zeitlichen Verzögerung von $\Delta t = n/S$ entspricht.

2. Signalverzögerungsvorrichtung (4) nach Anspruch 1, **dadurch gekennzeichnet, dass** zumindest eine der Verzögerungseinrichtungen (12a-12d) und/oder eine der Zusatzverzögerungseinrichtungen (13a-13d) in einem FPGA realisiert sind bzw. ist.

3. Signalverzögerungsvorrichtung (4) nach Anspruch 1 oder 2, **dadurch gekennzeichnet, dass** die Steuerungseinrichtung (15) ausgebildet ist, den Weiterleitungsverzögerungsfaktor gemäß $m = \lfloor n/D \rfloor$ zu bestimmen.

4. Signalverzögerungsvorrichtung (4) nach einem der Ansprüche 1 bis 3, **dadurch gekennzeichnet, dass** zumindest eine der D Zusatzverzögerungseinrichtungen (13a-13d) einen Arbeitstakt von $f_P = S/D$ aufweist.

5. Signalverzögerungsvorrichtung (4) nach einem der Ansprüche 1 bis 4, **dadurch gekennzeichnet, dass** zumindest eine der Zusatzverzögerungseinrichtungen (13a-13d) eine Verzögerungsleitung ist.

6. Signalverzögerungsvorrichtung (4) nach einem der Ansprüche 1 bis 5, **dadurch gekennzeichnet, dass** zumindest eine der Zusatzverzögerungseinrichtungen (13a-13d) ein Flipflop ist, vorzugsweise ein D-Flipflop ist.

7. Signalverzögerungsvorrichtung (4) zur Simulation von räumlichen Abständen bei auf elektromagnetischen Wellen basierenden Abstandsmessgeräten (8),
**dadurch gekennzeichnet,**

- **dass** die Signalverzögerungsvorrichtung (4) einen Demultiplexer (11), $D \in \mathbb{N}$ Verzögerungseinrichtungen (12a-12d), einen Multiplexer (14) und eine Steuerungseinrichtung (15) aufweist,
- **dass** der Demultiplexer (11) einen Demultiplexereingang (16) und D Demultiplexerausgänge (17a-17d) aufweist,
- **dass** jede der D Verzögerungseinrichtungen (12a-12d) einen Verzögerungseingang (18a-18d) und einen Verzögerungsausgang (19a-19d) aufweist,
- **dass** der Multiplexer (14) D Multiplexereingänge (22a-22d) und einen Multiplexerausgang (23) aufweist,
- **dass** bei jeder der D Verzögerungseinrichtungen (12a-12d) zum einen der Verzögerungseingang (18a-18d) und einer der D Demultiplexerausgänge (17a-17d) miteinander über einen Zuführungssignalpfad (24a-24d) und zum anderen der Verzögerungsausgang (19a-19d) und einer der D Multiplexereingänge (22a-22d) miteinander über einen Verzögerungssignalpfad (25a-25d) verbunden sind,
- **dass** der Demultiplexer (11) ausgebildet ist, einen Datenwörter aufweisenden Eingangsdatenwortstrom mit einer Außenübertragungsrate von S am Demultiplexereingang (16) in D miteinander verschachtelte Paralleldatenwortströme mit einer Innenübertragungsrate von jeweils P = S/D aufzuteilen und diese an den D Demultiplexerausgängen (17a-17d) auszugeben,
- **dass** jeder der D Verzögerungseinrichtungen (12a-12d) ein separater Weiterleitungsverzögerungsfaktor

$m_d \in \mathbb{N}_0$ mit $d \in \mathbb{N} \leq D$ vorgebbar ist, und jede der D Verzögerungseinrichtungen (12a-12d) ausgebildet ist, jedes Datenwort im jeweiligen Paralleldatenwortstrom am Verzögerungseingang (18a-18b) um eine separate Weiterleitungsverzögerungszeit $\Delta t_{m,d} = m_d/P$ zu verzögern und das verzögerte Datenwort am Verzögerungsausgang (19a-19d) auszugeben,

- **dass** der Steuerungseinrichtung (15) ein Ausgabeverzögerungsfaktor $n \in \mathbb{N}_0$ vorgebbar ist, die Steuerungseinrichtung (15) ausgebildet ist, aus einem vorgegebenen Ausgabeverzögerungsfaktor n die Weiterleitungsverzögerungsfaktoren $m_d$ zu bestimmen und diese den D einstellbaren Verzögerungseinrichtungen (12a-12d) vorzugeben und den Multiplexer (14) derart anzusteuern, dass ein Ausgangsdatenwortstrom am Multiplexerausgang (23) ausgegeben wird, der dem Eingangsdatenwortstrom mit einer zeitlichen Verzögerung von $\Delta t = n/S$ entspricht.

**8.** Signalverzögerungsvorrichtung (4) nach Anspruch 7, **dadurch gekennzeichnet, dass** zumindest eine der Verzögerungseinrichtungen (12a-12d) in einem FPGA realisiert ist.

**9.** Signalverzögerungsvorrichtung (4) nach Anspruch 7 oder 8, **dadurch gekennzeichnet, dass** die Steuerungseinrichtung (15) ausgebildet ist, die separaten Weiterleitungsverzögerungsfaktoren gemäß $m_d = \lfloor (n+d-1)/D \rfloor$ für $d \in \mathbb{N} \leq D$ zu bestimmen.

**10.** Signalverzögerungsvorrichtung (4) nach einem der Ansprüche 1 bis 9, **dadurch gekennzeichnet, dass** die Außenübertragungsrate $S \geq 2$ GS/s, vorzugsweise $S \geq 2{,}5$ GS/s ist.

**11.** Signalverzögerungsvorrichtung nach einem der Ansprüche 1 bis 10, **dadurch gekennzeichnet, dass** D = 2 oder D = 8 oder D = 4 ist.

**12.** Signalverzögerungsvorrichtung (4) nach einem der Ansprüche 1 bis 11, **dadurch gekennzeichnet, dass** der Demultiplexer (11) und/oder der Multiplexer (14) einen der Außenübertragungsrate S entsprechenden Arbeitstakt $f_S$ aufweisen bzw. aufweist.

**13.** Signalverzögerungsvorrichtung (4) nach einem der Ansprüche 1 bis 12, **dadurch gekennzeichnet, dass** zumindest eine der D Verzögerungseinrichtungen (12a-12d) einen Arbeitstakt von $f_P = S/D$ aufweist.

**14.** Signalverzögerungsvorrichtung (4) nach einem der Ansprüche 1 bis 13, **dadurch gekennzeichnet, dass** zumindest eine der Verzögerungseinrichtungen (12a-12d) eine Verzögerungsleitung ist.

**15.** Signalverzögerungsvorrichtung (4) nach einem der Ansprüche 1 bis 14, **dadurch gekennzeichnet, dass** die Signalverzögerungsvorrichtung (4) zur Simulation von Abständen bei auf Radar oder Lidar basierenden Abstandsmessgeräten (8) ausgebildet ist.

**16.** Simulatorvorrichtung (1) zur Simulation von räumlichen Abständen bei auf elektromagnetischen Wellen basierenden Abstandsmessgeräten (8)

- mit einem Empfänger (2), einem Analog-Digital-Umsetzer (3), einer Signalverzögerungsvorrichtung (4), einem Digital-Analog-Umsetzer (5) und einem Sender (6),
- wobei der Empfänger (2) ausgebildet ist, von einem Abstandsmessgerät (8) abgestrahlte Messsignale in Form von ersten elektromagnetischen Wellen (9) zu empfangen, abwärtszumischen und dem Analog-Digital-Umsetzer (3) zuzuführen,
- wobei der Analog-Digital-Umsetzer (3) ausgebildet ist, die abwärtsgemischten Messsignale in einen Datenwortstrom umzusetzen und der Signalverzögerungsvorrichtung (4) zuzuführen,
- wobei die Signalverzögerungseinrichtung (4) ausgebildet ist, den Datenwortstrom zu verzögern und den verzögerten Datenwortstrom dem Digital-Analog-Umsetzer (5) zuzuführen,
- wobei der Digital-Analog-Umsetzer (5) ausgebildet ist, den verzögerten Datenwortstrom in Echosignale umzusetzen und dem Sender (6) zuzuführen und
- wobei der Sender (6) ausgebildet ist, die Echosignale aufwärtszumischen und in Form von zweiten elektromagnetischen Wellen zum Abstandsmessgerät (8) abzustrahlen,

**dadurch gekennzeichnet,**

**dass** die Signalverzögerungsvorrichtung (4) nach einem der Ansprüche 1 bis 15 ausgebildet ist.

**17.** Simulatorvorrichtung (1) nach Anspruch 16, **dadurch gekennzeichnet, dass** die Simulatorvorrichtung (1) eine einzige Antenne (7) sowohl zum Senden als auch Empfangen aufweist.

**18.** Simulatorvorrichtung (1) nach Anspruch 16, **dadurch gekennzeichnet, dass** die Simulatorvorrichtung (1) zur Simulation von Abständen bei auf Radar oder Lidar basierenden Abstandsmessgeräten (8) ausgebildet ist.

## Claims

**1.** Signal delay device (4) for simulating spatial distances in distance measuring devices (8) based on electromagnetic waves,
**characterised in that**

- the signal delay device (4) has a demultiplexer (11), $D \in \mathbb{N}$ delay devices (12a-12d), D additional delay devices (13a-13d), a multiplexer (14) and a control device (15),
- **in that** the demultiplexer (11) has a demultiplexer input (16) and D demultiplexer outputs (17a-17d),
- **in that** each of the D delay devices (12a-12d) has a delay input (18a-18d) and a delay output (19a-19d),
- **in that** each of the D additional delay devices (13a-13d) has an additional delay input (20a-20d) and an additional delay output (21a-21d),
- **in that** the multiplexer (14) has 2-D multiplexer inputs (22a-22h) and a multiplexer output (23),
- **in that**, in each of the D delay devices (12a-12d), on the one hand the delay input (18a-18d) and one of the D demultiplexer outputs (17a-17d) are connected to one another via a supply signal path (24a-24d) and, on the other hand, the delay output (19a-19d) and one of the 2-D multiplexer inputs (22a-22h) are connected to one another via a delay signal path (25a-25d),
- **in that** in each of the D additional delay devices (13a-13d), on the one hand the additional delay input (20a-20d) is connected to one of the delay signal paths (25a-25d) and on the other hand the additional delay output (21a-21d) and one of the 2-D multiplexer inputs (22a-22h) are connected to one another via an additional delay signal path (26a-26d),
- **in that** the demultiplexer (11) is designed to divide an input data word stream comprising data words with an external transmission rate of S at the demultiplexer input (16) into D interleaved parallel data word streams each with an internal transmission rate of P = S/D and to output these at the D demultiplexer outputs (17a-17d),
- **in that** a retransmission delay factor $m \in \mathbb{N}_0$ can be preset for each of the D delay devices (12a-12d), and each of the D delay devices (12a-12d) is designed to delay each data word in the respective parallel data word stream at the delay input (18a-18d) by a retransmission delay time $\Delta t_m = m/P$ and to output the delayed data word at the delay output (19a-19d),
- **in that** each of the D additional delay devices (13a-13d) is designed to delay each data word in the respective delayed parallel data word stream at the additional delay input (20a-20d) by an additional delay time of $\Delta t_z = 1/P$ and to output the additionally delayed data word at the additional delay output (21a-21d), and
- that an output delay factor $n \in \mathbb{N}0$ can be preset for the control device (15), the control device (15) is designed to determine the retransmission delay factor m from a preset output delay factor n and to preset this to the D delay devices (12a-12d) and to control the multiplexer (14) in such a way that an output data word stream is output at the multiplexer output (23) which corresponds to the input data word stream with a time delay of $\Delta t = n/S$.

**2.** Signal delay device (4) according to claim 1, **characterised in that** at least one of the delay devices (12a-12d) and/or one of the additional delay devices (13a-13d) is/are implemented in an FPGA.

**3.** Signal delay device (4) according to claim 1 or 2, **characterised in that** the control device (15) is designed to determine the forwarding delay factor according to $m = \lfloor n/D \rfloor$.

**4.** Signal delay device (4) according to one of claims 1 to 3, **characterised in that** at least one of the D additional delay devices (13a-13d) has a duty cycle of $f_P = S/D$.

**5.** Signal delay device (4) according to any one of claims 1 to 4, **characterised in that** at least one of the additional delay devices (13a-13d) is a delay line.

6. Signal delay device (4) according to one of claims 1 to 5, **characterised in that** at least one of the additional delay devices (13a-13d) is a flip-flop, preferably a D-flip-flop.

7. Signal delay device (4) for the simulation of spatial distances in distance measuring devices (8) based on electromagnetic waves,
**characterised in**

- **in that** the signal delay device (4) has a demultiplexer (11), D E N delay devices (12a-12d), a multiplexer (14) and a control device (15),
- **in that** the demultiplexer (11) has a demultiplexer input (16) and D demultiplexer outputs (17a-17d),
- **in that** each of the D delay devices (12a-12d) has a delay input (18a-18d) and a delay output (19a-19d),
- **in that** the multiplexer (14) has D multiplexer inputs (22a-22d) and a multiplexer output (23),
- **in that**, in each of the D delay devices (12a-12d), on the one hand the delay input (18a-18d) and one of the D demultiplexer outputs (17a-17d) are connected to one another via a supply signal path (24a-24d) and, on the other hand, the delay output (19a-19d) and one of the D multiplexer inputs (22a-22d) are connected to one another via a delay signal path (25a-25d),
- **in that** the demultiplexer (11) is designed to divide an input data word stream comprising data words with an external transmission rate of S at the demultiplexer input (16) into D interleaved parallel data word streams each with an internal transmission rate of P = S/D and to output these at the D demultiplexer outputs (17a-17d),
- that a separate forwarding delay factor $m_d \in \mathbb{N}_0$ with $d \in \mathbb{N} \leqslant D$ can be preset for each of the D delay devices (12a-12d), and each of the D delay devices (12a-12d) is formed, to delay each data word in the respective parallel data word stream at the delay input (18a-18b) by a separate forwarding delay time $\Delta t_{m,d} = m_d/P$ and to output the delayed data word at the delay output (19a-19d),
- **in that** an output delay factor $n \in \mathbb{N}_0$ can be preset for the control device (15), the control device (15) is designed to determine the forwarding delay factors md from a preset output delay factor n and to preset these to the D adjustable delay devices (12a-12d) and to control the multiplexer (14) in such a way that an output data word stream is output at the multiplexer output (23) which corresponds to the input data word stream with a time delay of $\Delta t = n/S$.

8. Signal delay device (4) according to claim 7, **characterised in that** at least one of the delay devices (12a-12d) is implemented in an FPGA.

9. Signal delay device (4) according to claim 7 or 8, **characterised in that** the control device (15) is designed to determine the separate forwarding delay factors according to $m_d = \lfloor (n+d-1)/D \rfloor$ for $d \in \mathbb{N} \leqslant D$.

10. Signal delay device (4) according to one of claims 1 to 9, **characterised in that** the external transmission rate $S \geq 2$ GS/s, preferably $S \geq 2.5$ GS/s.

11. Signal delay device according to one of claims 1 to 10, **characterised in that** D = 2 or D = 8 or D = 4.

12. Signal delay device (4) according to one of claims 1 to 11, **characterised in that** the demultiplexer (11) and/or the multiplexer (14) have or has a working clock fs corresponding to the external transmission rate S.

13. Signal delay device (4) according to one of claims 1 to 12, **characterised in that** at least one of the D delay devices (12a-12d) has a working clock of $f_P = S/D$.

14. Signal delay device (4) according to any one of claims 1 to 13, **characterised in that** at least one of the delay devices (12a-12d) is a delay line.

15. Signal delay device (4) according to one of claims 1 to 14, **characterised in that** the signal delay device (4) is designed to simulate distances in radar- or lidar-based distance measuring devices (8).

16. Simulator device (1) for simulating spatial distances in distance measuring devices (8) based on electromagnetic waves

- with a receiver (2), an analogue-to-digital converter (3), a signal delay device (4), a digital-to-analogue converter (5) and a transmitter (6),
- wherein the receiver (2) is designed to receive measurement signals emitted by a distance measuring device (8) in the form of first electromagnetic waves (9), to down-convert them and to feed them to the analogue-to-digital converter (3),
- wherein the analogue-to-digital converter (3) is designed to convert the down-converted measurement signals into a data word stream and to feed them to the signal delay device (4),
- wherein the signal delay device (4) is designed to delay the data word stream and to feed the delayed data word stream to the digital-to-analogue converter (5),
- wherein the digital-to-analogue converter (5) is designed to convert the delayed data word stream into echo signals and feed them to the transmitter (6), and
- wherein the transmitter (6) is designed to up-convert the echo signals and to radiate them in the form of second electromagnetic waves to the distance measuring device (8),

**characterised in**
**that** the signal delay device (4) is designed according to one of claims 1 to 15.

**17.** Simulator device (1) according to claim 16, **characterised in that** the simulator device (1) comprises a single antenna (7) for both transmitting and receiving.

**18.** Simulator device (1) according to claim 16, **characterised in that** the simulator device (1) is designed to simulate distances in radar- or lidar-based distance measuring devices (8).

**Revendications**

**1.** Dispositif de retard de signal (4) pour la simulation de distances spatiales dans des appareils de mesure de distance (8) basés sur des ondes électromagnétiques,
**caractérisé en ce que**,

- le dispositif de retard de signal (4) comprend un démultiplexeur (11), $D \in \mathbb{N}$ dispositifs de retard (12a-12d), D dispositifs de retard supplémentaires (13a-13d), un multiplexeur (14) et un dispositif de commande (15),
- que le démultiplexeur (11) présente une entrée de démultiplexeur (16) et D sorties de démultiplexeur (17a-17d),
- **en ce que** chacun des D dispositifs de retard (12a-12d) présente une entrée de retard (18a-18d) et une sortie de retard (19a-19d),
- **en ce que** chacun des D dispositifs de temporisation supplémentaires (13a-13d) présente une entrée de temporisation supplémentaire (20a-20d) et une sortie de temporisation supplémentaire (21a-21d),
- que le multiplexeur (14) présente 2-D entrées de multiplexeur (22a-22h) et une sortie de multiplexeur (23),
- **en ce que**, pour chacun des D dispositifs de retard (12a-12d), d'une part l'entrée de retard (18a-18d) et l'une des D sorties de démultiplexeur (17a-17d) sont reliées entre elles par un chemin de signal d'alimentation (24a-24d) et, d'autre part, la sortie de retard (19a-19d) et l'une des 2-D entrées de multiplexeur (22a-22h) sont reliées entre elles par un chemin de signal de retard (25a-25d),
- **en ce que**, pour chacun des D dispositifs de temporisation supplémentaires (13a-13d), d'une part l'entrée de temporisation supplémentaire (20a-20d) est reliée à l'un des chemins de signal de temporisation (25a-25d) et d'autre part la sortie de temporisation supplémentaire (21a-21d) et l'une des entrées de multiplexeur 2-D (22a-22h) sont reliées entre elles par un chemin de signal de temporisation supplémentaire (26a-26d),
- **en ce que** le démultiplexeur (11) est conçu pour diviser un flux de mots de données d'entrée comprenant des mots de données avec un taux de transmission externe de S à l'entrée de démultiplexeur (16) en D flux de mots de données parallèles entrelacés avec un taux de transmission interne de respectivement P = S/D et pour les délivrer aux D sorties de démultiplexeur (17a-17d),
- **en ce que** chacun des D dispositifs de retardement (12a-12d) peut être prédéfini avec un facteur de retardement de transmission $m \in \mathbb{N}_0$, et chacun des D dispositifs de retardement (12a-12d) est conçu pour retarder chaque mot de données dans le flux de mots de données parallèle respectif à l'entrée de retardement (18a-18d) d'un temps de retardement de transmission $\Delta t_m = m/P$ et pour délivrer le mot de données retardé à la sortie de retardement (19a-19d),
- **en ce que** chacun des D dispositifs de temporisation supplémentaires (13a-13d) est conçu pour retarder chaque mot de données dans le flux de mots de données parallèles retardé respectif à l'entrée de temporisation supplémentaire (20a-20d) d'un temps de retard supplémentaire de $\Delta t_z = 1/P$ et pour délivrer le mot de données retardé supplémentaire à la sortie de temporisation supplémentaire (21a-21d) et

- **en ce qu'**un facteur de retard de sortie $n \in \mathbb{N}_0$ peut être prescrit au dispositif de commande (15), le dispositif de commande (15) est conçu pour déterminer le facteur de retard de retransmission m à partir d'un facteur de retard de sortie n prescrit et pour prescrire celui-ci aux D dispositifs de temporisation (12a-12d) et pour commander le multiplexeur (14) de telle sorte qu'un flux de mots de données de sortie soit délivré à la sortie du multiplexeur (23), qui correspond au flux de mots de données d'entrée avec un retard temporel de $\Delta t = n/S$.

**2.** Dispositif de retard de signal (4) selon la revendication 1, **caractérisé en ce qu'**au moins l'un des dispositifs de retard (12a-12d) et/ou l'un des dispositifs de retard supplémentaires (13a-13d) est ou sont réalisés dans un FPGA.

**3.** Dispositif de retard de signal (4) selon la revendication 1 ou 2, **caractérisé en ce que** le dispositif de commande (15) est conçu pour déterminer le facteur de retard de retransmission selon $m = \lfloor n/D \rfloor$.

**4.** Dispositif de temporisation de signal (4) selon l'une des revendications 1 à 3, **caractérisé en ce qu'**au moins l'un des D dispositifs de temporisation supplémentaires (13a-13d) présente une cadence de travail de $f_P = S/D$.

**5.** Dispositif de temporisation de signal (4) selon l'une des revendications 1 à 4, **caractérisé en ce qu'**au moins un des dispositifs de temporisation supplémentaires (13a-13d) est une ligne à retard.

**6.** Dispositif de retard de signal (4) selon l'une des revendications 1 à 5, **caractérisé en ce qu'**au moins un des dispositifs de retard supplémentaires (13a-13d) est une bascule, de préférence une bascule D.

**7.** Dispositif de retard de signal (4) pour la simulation de distances spatiales dans des appareils de mesure de distance (8) basés sur des ondes électromagnétiques,
**caractérisé en ce que**

- **en ce que** le dispositif de retard de signal (4) comprend un démultiplexeur (11), D E N dispositifs de retard (12a-12d), un multiplexeur (14) et un dispositif de commande (15),
- que le démultiplexeur (11) présente une entrée de démultiplexeur (16) et D sorties de démultiplexeur (17a-17d),
- **en ce que** chacun des D dispositifs de temporisation (12a-12d) présente une entrée de temporisation (18a-18d) et une sortie de temporisation (19a-19d),
- que le multiplexeur (14) présente D entrées de multiplexeur (22a-22d) et une sortie de multiplexeur (23),
- **en ce que**, dans chacun des D dispositifs de retard (12a-12d), d'une part l'entrée de retard (18a-18d) et l'une des D sorties de démultiplexeur (17a-17d) sont reliées entre elles par un trajet de signal d'alimentation (24a-24d) et, d'autre part, la sortie de retard (19a-19d) et l'une des D entrées de multiplexeur (22a-22d) sont reliées entre elles par un trajet de signal de retard (25a-25d),
- **en ce que** le démultiplexeur (11) est conçu pour diviser un flux de mots de données d'entrée comprenant des mots de données avec un taux de transmission externe de S à l'entrée de démultiplexeur (16) en D flux de mots de données parallèles entrelacés avec un taux de transmission interne de respectivement P = S/D et pour les délivrer aux D sorties de démultiplexeur (17a-17d),
- **en ce qu'**un facteur de retard de retransmission séparé $md \in \mathbb{N}_0$ avec $d \in \mathbb{N} \leqslant D$ peut être prédéfini pour chacun des D dispositifs de retard (12a-12d), et chacun des D dispositifs de retard (12a-12d) est formé, de retarder chaque mot de données dans le flux de mots de données parallèles respectif à l'entrée de temporisation (18a-18b) d'un temps de retard de transmission séparé $\Delta t_{m,d} = m_d/P$ et de délivrer le mot de données retardé à la sortie de temporisation (19a-19d),
- **en ce qu'**un facteur de retard de sortie $n \in \mathbb{N}_0$ peut être prescrit au dispositif de commande (15), le dispositif de commande (15) est conçu pour déterminer les facteurs de retard de retransmission md à partir d'un facteur de retard de sortie n prescrit et pour les prescrire aux D dispositifs de retard réglables (12a-12d) et pour commander le multiplexeur (14) de telle sorte qu'un flux de mots de données de sortie soit délivré à la sortie du multiplexeur (23), qui correspond au flux de mots de données d'entrée avec un retard temporel de $\Delta t = n/S$.

**8.** Dispositif de retard de signal (4) selon la revendication 7, **caractérisé en ce qu'**au moins un des dispositifs de retard (12a-12d) est réalisé dans un FPGA.

**9.** Dispositif de retard de signal (4) selon la revendication 7 ou 8, **caractérisé en ce que** le dispositif de commande (15) est conçu pour déterminer les facteurs de retard de retransmission séparés selon $md = \lfloor(n+d-1)/D\rfloor$ pour $d \in \mathbb{N} \leqslant D$ .

**10.** Dispositif de retard de signal (4) selon l'une des revendications 1 à 9, **caractérisé en ce que** le débit de transmission externe est S ≥ 2 GS/s, de pré férence S ≥ 2,5 GS/s.

**11.** Dispositif de retard de signal selon l'une quelconque des revendications 1 à 10, **caractérisé en ce que** D = 2 ou D = 8 ou D = 4.

**12.** Dispositif de retard de signal (4) selon l'une des revendications 1 à 11, **caractérisé en ce que** le démultiplexeur (11) et/ou le multiplexeur (14) présente(nt) une cadence de travail $f_S$ correspondant au débit de transmission externe S.

**13.** Dispositif de retard de signal (4) selon l'une des revendications 1 à 12, **caractérisé en ce qu'**au moins l'un des D dispositifs de retard (12a-12d) présente une cadence de travail de $f_P$ = S/D.

**14.** Dispositif de temporisation de signal (4) selon l'une des revendications 1 à 13, **caractérisé en ce qu'**au moins un des dispositifs de temporisation (12a-12d) est une ligne à retard.

**15.** Dispositif de retard de signal (4) selon l'une des revendications 1 à 14, **caractérisé en ce que** le dispositif de retard de signal (4) est conçu pour simuler des distances dans des appareils de mesure de distance (8) basés sur un radar ou un lidar.

**16.** Dispositif de simulation (1) pour la simulation de distances spatiales pour des appareils de mesure de distance (8) basés sur des ondes électromagnétiques

- avec un récepteur (2), un convertisseur analogique-numérique (3), un dispositif de retard de signal (4), un convertisseur numérique-analogique (5) et un émetteur (6),
- le récepteur (2) étant conçu pour recevoir des signaux de mesure émis par un appareil de mesure de distance (8) sous la forme de premières ondes électromagnétiques (9), les mélanger vers le bas et les amener au convertisseur analogique-numérique (3),
- le convertisseur analogique-numérique (3) étant conçu pour convertir les signaux de mesure abaissés en un flux de mots de données et les amener au dispositif de temporisation de signaux (4),
- le dispositif de retardement de signal (4) étant conçu pour retarder le flux de mots de données et pour amener le flux de mots de données retardé au convertisseur numérique-analogique (5),
- le convertisseur numérique-analogique (5) étant conçu pour convertir le flux de mots de données retardé en signaux d'écho et pour l'amener à l'émetteur (6) et
- l'émetteur (6) étant conçu pour amplifier les signaux d'écho et les émettre sous la forme de deuxièmes ondes électromagnétiques vers l'appareil de mesure de distance (8),

**caractérisé en ce que**
**en ce que** le dispositif de retardement des signaux (4) est réalisé selon l'une des revendications 1 à 15.

**17.** Dispositif simulateur (1) selon la revendication 16, **caractérisé en ce que** le dispositif simulateur (1) comporte une seule antenne (7) à la fois d'émission et de réception.

**18.** Dispositif de simulation (1) selon la revendication 16, **caractérisé en ce que** le dispositif de simulation (1) est conçu pour simuler des distances pour des appareils de mesure de distance (8) basés sur un radar ou un lidar.

8
9
10
1
7
2
6
3
4
5

Fig. 1

4
11
14
15
16
23
n
12a
12b
12c
12d
13a
13b
13c
13d
17a
17b
17c
17d
18a
18b
18c
18d
19a
19b
19c
19d
20a
20b
20c
20d
21a
21b
21c
21d
22a
22b
22c
22d
22e
22f
22g
22h
24a
24b
24c
24d
25a
25b
25c
25d
26a
26b
26c
26d

Fig. 2

a)
a0
a1
a2
a3
a4
a5
a6
a7
a8
a9
a10
a11
a12
t
b)
a0
a4
a8
t
c)
a0
a4
t
d)
a1
a5
a9
t
e)
a1
a5
t
f)
a2
a6
a10
t
g)
a2
a6
t
h)
a3
a7
a11
t
i)
a3
a7
t
j)
a0
a1
a2
a3
a4
a5
a6
a7
a8
Δtm
=Δt
Δtm+Δtz
t

Fig. 3

a)
a0
a1
a2
a3
a4
a5
a6
a7
a8
a9
a10
a11
a12
t
b)
a0
a4
a8
t
c)
a0
a4
t
d)
a1
a5
a9
t
e)
a1
a5
t
f)
a2
a6
a10
t
g)
a2
a6
t
h)
a3
a7
a11
t
i)
a3
a7
t
j)
a0
a1
a2
a3
a4
a5
a6
a7
Δtm
Δt
Δtm+Δtz
t

Fig. 4

4
18a
17a
19a
22a
11
12a
14
24a
25a
17b
18b
19b
22b
12b
24b
25b
16
23
18c
17c
19c
22c
12c
24c
25c
18d
17d
19d
22d
12d
24d
25d
n
15

Fig. 5

a)
$a_0$
$a_1$
$a_2$
$a_3$
$a_4$
$a_5$
$a_6$
$a_7$
$a_8$
$a_9$
$a_{10}$
$a_{11}$
t
b)
$a_0$
$a_4$
$a_8$
$t_{m1}$
t
c)
$a_1$
$a_5$
$a_9$
$t_{m2}$
t
d)
$a_2$
$a_6$
$a_{10}$
$t_{m3}$
t
e)
$a_3$
$a_7$
$a_{11}$
$t_{m4}$
t
f)
$a_0$
$a_1$
$a_2$
$a_3$
$a_4$
$a_5$
$a_6$
$a_7$
$a_8$
$\Delta t$
t

Fig. 6

a)
$a_0$
$a_1$
$a_2$
$a_3$
$a_4$
$a_5$
$a_6$
$a_7$
$a_8$
$a_9$
$a_{10}$
$a_{11}$
t
b)
$a_0$
$a_4$
$a_8$
$t_{m1}$
t
c)
$a_1$
$a_5$
$a_9$
$t_{m2}$
t
d)
$a_2$
$a_6$
$a_{10}$
$t_{m3}$
t
e)
$a_3$
$a_4$
$t_{m4}$
t
f)
$a_0$
$a_1$
$a_2$
$a_3$
$a_4$
$a_5$
$a_6$
$a_7$
$\Delta t$
t

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102017217800 A1